# NEUE EUROPÄISCHE PATENTSCHRIFT

(11) **EP 2 256 340 B2**
(45) Veröffentlichungstag und Bekanntmachung des Hinweises auf die Entscheidung über den Einspruch: **27.05.2020**
(45) Hinweis auf die Patenterteilung: 29.06.2016
(21) Anmeldenummer: 10174991.9
(22) Anmeldetag: 12.04.2002
(51) Int. Cl.: F03D 9/00, F03D 7/02, F03D 7/04

(54) **Verfahren zum Betrieb einer Windenergieanlage**
Method for operating a wind energy plant
Procédé d'exploitation d'une installation d'énergie éolienne

(30) Priorität: 20.04.2001 DE 10119624; 04.08.2001 DE 10138399
(43) Veröffentlichungstag der Anmeldung: 01.12.2010
(62) Teilanmeldung aus: 04104405.8
(73) Patentinhaber: Wobben Properties GmbH, 26607 Aurich (DE)
(72) Erfinder: Wobben, Aloys, 26607 Aurich (DE)
(74) Vertreter: Eisenführ Speiser

(56) Entgegenhaltungen:
- EP-A- 0 677 911
- WO-A-01/25630
- WO-A1-93/11604
- WO-A1-99/52193
- DE-A1- 19 756 777
- SU-A1- 1 455 039
- US-A- 4 511 807
- MITSUTOSHI YAMAMOTO ET AL: "ACTIVE AND REACTIVE POWER CONTROL FOR DOUBLY-FED WOUND ROTOR INDUCTION GENERATOR", IEEE TRANSACTIONS ON POWER ELECTRONICS, IEEE SERVICE CENTER, PISCATAWAY, NJ, US, Bd. 6, Nr. 4, 1. Oktober 1991 (1991-10-01) , Seiten 624-629, XP000248873, ISSN: 0885-8993, DOI: 10.1109/63.97761
- Pierik et al: "Damping of mechanical resonance and protection against grid failure for variable speed wind turbines", ECN report ECN-C-93 004, 1993,
- GRIDCODE 2000, Netz- und Systemregeln der deutschen Übertragungsnetzbetreiber, DVG Deutsche Verbundgesellschaft E.V., Heidelberg

## Beschreibung

Die vorliegende Erfindung betrifft ein Verfahren zum Betreiben einer Windenergieanlage mit einem von einem Rotor antreibbaren elektrischen Generator zum Abgeben elektrischer Leistung an einen elektrischen Verbraucher, insbesondere ein elektrisches Netz.

Die Erfindung betrifft ferner eine Windenergieanlage mit einem Rotor und einem mit dem Rotor gekoppelten elektrischen Generator zum Abgeben elektrischer Leistung an einen elektrischen Verbraucher, insbesondere ein elektrisches Netz.

Bei den bekannten Windenergieanlagen zum Erzeugen elektrischer Energie aus Windenergie wird der Generator mit dem elektrischen Verbraucher, häufig einem elektrischen Netz, im Parallelbetrieb betrieben. D.h., so lange das Windangebot mit einer ausreicht, wird die Windenergieanlage elektrische Energie erzeugen und in das Netz einspeisen.

Kommt es jedoch im Netz zu einer Störung, z.B. infolge eines Kurzschlusses im Netz, werden die Windenergieanlagen bislang von dem Netz getrennt und erst nach dem Wiederherstellen normaler Betriebsbedingungen an das Netz angeschaltet.

Dadurch ist ein rasches Stützen des Netzes nach dem Auftreten einer Störung, welches insbesondere bei großen Spannungs- bzw. Leistungsbedarfs-Schwankungen erforderlich ist, nicht mehr möglich.

Ein Beispiel aus dem Stand der Technik ist aus WO 9 311 604 bekannt.

Aufgabe der vorliegenden Erfindung ist es daher, eine Steuerung für eine oder mehrere Windenergieanlagen anzugeben, welche Schwankungen im Netz weitestmöglich entgegenwirkt.

Diese Aufgabe wird gemäß einem Verfahren der eingangs genannten Art dadurch gelöst, dass die von dem Generator an den Verbraucher abgegebene Leistung in Abhängigkeit von einem an den Verbraucher abgegebenen Strom geregelt wird.

Bei einer Vorrichtung der eingangs genannten Art wird die Aufgabe gelöst durch eine Regelungseinrichtung mit einem Stromaufnehmer zum Aufnehmen eines an den Verbraucher abgegebenen elektrischen Stromes, so dass die von dem Generator an den Verbraucher abgegebene Leistung in Abhängigkeit von dem von dem Stromaufnehmer aufgenommenen Strom regelbar ist.

Auf diese Weise kann bei schwankenden Leistungsanforderungen aus dem Netz die benötigte Leistung erzeugt und eingespeist werden.

Um im Falle einer Störung im Netz, z.B. in Folge eines Kurzschlusses im Netz, eine Überlastung von Teilen der Windenergieanlage und/oder des Netzes zu vermeiden, wird die Windenergieanlage derart gesteuert, dass der an das Netz abgegebene Strom einen vorgegebenen Wert nicht überschreitet.

In einer besonders bevorzugten Ausführungsform der Erfindung wird die Höhe dieses maximal abgebbaren Stromes für jede Phase des Netzes geregelt, um einerseits das Netz so weit wie möglich stützen zu können, ohne andererseits Komponenten der Gefahr einer Schädigung auszusetzen.

Besonders bevorzugt kann dabei durch einen externen Eingang die Windenergieanlage entsprechend den Vorgaben einer entfernten Steuerungszentrale betrieben werden. Auf diese Weise kann z.B. ein Energieversorgungsunternehmen von der Windenergieanlage den gerade zur Netzstützung benötigten Strom abfordern.

Weitere vorteilhafte Ausführungsformen sind in den Unteransprüchen angegeben.

Nachfolgend wird eine Ausführungsform der Erfindung anhand der Figuren näher beschrieben. Dabei zeigen:
- Fig. 1: eine in ein Netz einspeisende Windenergieanlage in einer vereinfachten Darstellung;
- Fig. 2: eine erfindungsgemäße Regelungseinrichtung zum Betreiben einer Windenergieanlage; und
- Fig. 3: ein Blockschaltbild wesentlicher Bestandteile der Steuerungs- und Regelungsanordnung.

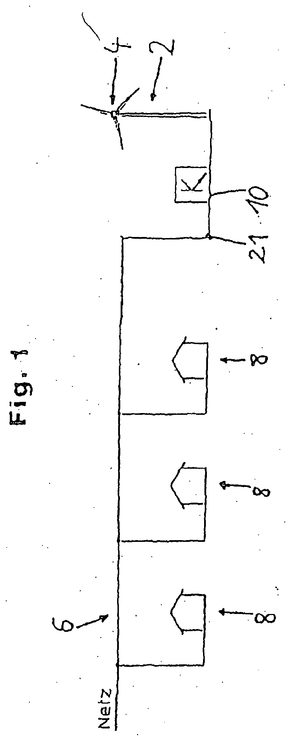

Eine in Fig. 1 vereinfacht dargestellte Windenergieanlage 2 mit einem Rotor 4 ist mit einem elektrischen Netz 6 verbunden, das beispielsweise ein öffentliches Netz sein kann. An das Netz sind mehrere elektrische Verbraucher 8 angeschlossen. Der in Fig. 1 nicht dargestellte elektrische Generator der Windenergieanlage 2 ist mit einer elektrischen Steuerungs- und Regelungs-Anordnung 10 gekoppelt, die den in dem Generator erzeugten Wechselstrom zunächst gleichrichtet und anschließend in einen Wechselstrom mit einer der Netzfrequenz entsprechenden Frequenz umwandelt. Anstelle eines Netzes 6 könnte auch ein einzelner Verbraucher von der Windenergieanlage 2 mit elektrischer Energie versorgt werden. Die Steuerungs- und Regelungsanordnung 10 weist eine erfindungsgemäße Regelungseinrichtung auf.

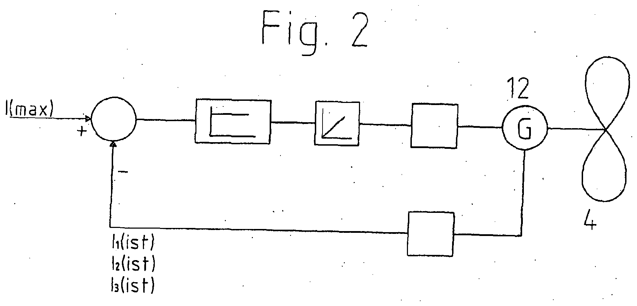

Fig. 2 veranschaulicht die erfindungsgemäße Regelungseinrichtung. Der vereinfacht dargestellte Rotor 4 ist mit einem Generator 12 gekoppelt, der eine elektrische Leistung bereitstellt, die von der Windgeschwindigkeit und somit der Windleistung abhängt. Der in dem Generator 12 erzeugte Wechselstrom wird zunächst gleichgerichtet und anschließend in einen Wechselstrom umgewandelt, der eine der Netzfrequenz entsprechende Frequenz aufweist.

Mit Hilfe eines Stromaufnehmers (nicht dargestellt) wird der in das Netz 6 (Fig. 1) eingespeiste Strom ermittelt. Dabei wird der Strom mit einem vorgegebenen Wert I(max) verglichen.

Überschreitet nun der in das Netz 6 eingespeiste Strom den vorgegebenen Maximalwert I(max), wird durch die Regelungseinrichtung die von der gesamten Windenergieanlage (und/oder deren Generator) erzeugte Leistung so eingestellt, dass der eingespeiste Strom den vorgegebenen Grenzwert I(max) nicht überschreitet. Bei einem Kurzschluss kann dies beispielsweise dadurch geschehen, dass die Windenergieanlage eine deutlich geringere Leistung als zuvor in das Netz einspeist, die damit nicht ins Netz eingespeiste Leistung aber anderweitig außerhalb des Netzes einsetzt, beispielsweise für einen Dumpload (Widerstand) oder die Einspeisung der nicht in das Netz abgegebenen Leistung in Kondensatoren oder andere Zwischenspeicher. Sobald das Netz dann wieder vollständig zur Verfügung steht, kann auch die gespeicherte Energie ins Netz wieder abgegeben werden.

Auf diese Weise kann selbst bei einem Kurzschluss im Netz die Windenergieanlage weiterhin Leistung an das Netz abgeben und das Netz stützen, ohne dass in Folge des Kurzschlusses der Strom den vorgegebenen Grenzwert überschreitet.

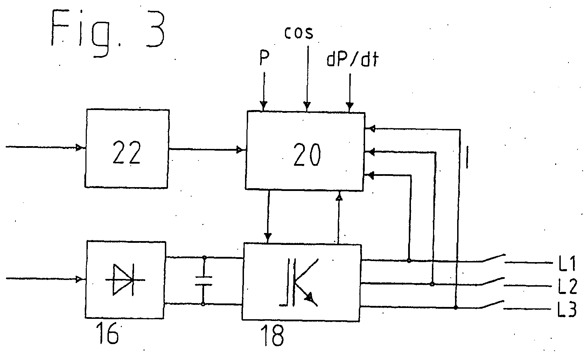

Fig. 3 zeigt Bestandteile der Steuerungs- und Regelungsanordnung 10 in Fig. 1. Die Steuerungs- und Regelungsanordnung 10 weist einen Gleichrichter 16 auf, in dem der von dem Generator erzeugte Wechselstrom gleichgerichtet wird. Ein mit dem Gleichrichter 16 verbundener Wechselrichter 18 wandelt den Gleichstrom wiederum in einen Wechselstrom um, der eine der Netzfrequenz entsprechende Frequenz aufweist. Dieser Strom wird über drei Phasen L1, L2 und L3 in das Netz 6 eingespeist. Der Wechselrichter 18 wird mit Hilfe eines Mikrocomputers 20, der Teil der Regelungseinrichtung ist, gesteuert. Dazu ist der Mikroprozessor 20 mit dem Wechselrichter 18 gekoppelt. Als Eingangsgrößen für die Regelung des Stromes, mit dem die von der Windenergieanlage 2 zur Verfügung gestellte elektrische Leistung in das Netz 6 eingespeist wird, sind der aktuelle Strom bzw. die aktuellen Ströme, die Netzfrequenz, die elektrische Leistung P des Generators, der Leistungsfaktor cos _sowie der Leistungsgradient dP/dt vorgesehen. In dem Mikroprozessor 20 wird die erfindungsgemäße Regelung des einzuspeisenden Stromes verwirklicht. Dabei wird der Strom auf jeder der Phasen L1, L2 und L3 separat erfasst und mit seinem Betrag in der erfindungsgemäßen Regelung berücksichtigt.

Steigt nunmehr der gemessene Strom(betrag) I(ist) einer Phase über einen vorbestimmten Maximalwert an, wird der Wechselrichter 18 so gesteuert, dass der Strom(betrag) unter den vorgegebenen Maximalstroms I(max) sinkt und die dann erzeugte elektrische Energie aus Windenergie, die aufgrund der Strombegrenzung nicht ins Netz eingespeist wird, wird anderweitig verwendet, beispielsweise über einen Widerstand (Dumpload) gegeben oder in einem Zwischenspeicher (z.B. Kondensator, Ultracap) gespeichert.

Dabei kann die Steuerung der Windenergieanlage selbsttätig arbeiten. Die Windenergieanlage erfasst dann einen Kurzschluss im Netz z.B. durch die Überwachung der Spannungen der einzelnen Phasen des Netzes und/oder deren Phasenlage. Werden für Spannungen und/oder Phasendifferenzen vorgebbare Grenzwerte erreicht, erkennt die Windenergieanlage einen Kurzschluss und arbeitet nach einem für diesen Fall vorgesehen Algorithmus.

Durch den externen Zugang (22) ergibt sich, z.B. für das Energieversorgungsunternehmen, an dessen Netz die Windenergieanlage angeschlossen ist, die Möglichkeit besteht, in den Betrieb der Windenergieanlage einzugreifen und beispielsweise den Betrag des einzuspeisenden Stromes, die Art des Stromes (Wirkstrom, Blindstrom) und/oder den Phasenwinkel und/oder Phasenlage usw. zu verändern. Auf diese Weise kann das Energieversorgungsunternehmen genau diejenigen Werte (den Strom, die Spannung, die elektrische Leistung) für die von der Windenergieanlage in das Netz einzuspeisende Leistung einstellen, die dem Bedarf des Netzbetreibers entsprechen.

## Patentansprüche

1. Verfahren zum Betreiben einer Windenergieanlage mit einem von einem Rotor (4) antreibbaren elektrischen Generator zum Abgeben elektrischer Leistung an einen elektrischen Verbraucher, nämlich ein elektrisches Netz auch im Falle eines Kurzschlusses im Netz, wobei die von dem Generator (12) an den Verbraucher (6) abgegebene Leistung in Abhängigkeil von einem an dem Verbraucher abgegebenen Strom geregelt wird, **dadurch gekennzeichnet, dass** dann, wenn der von dem Generator an den Verbraucher abgegebene Strom einen vorgebbaren Maximalwert (I(max)) überschreitet mittels einer Regelungseinrichtung der Windenergieanlage, die von der gesamten Windenergieanlage und/oder deren Generator erzeugte Leistung so eingestellt wird, dass der eingespeiste Strom den vorgegebenen Maximalwert (I(max)) nicht überschreitet, wobei bei einem Kurzschluss im Netz dies dadurch geschieht, dass die Windenergieanlage eine deutlich geringere Leistung als zuvor in das Netz einspeist, die damit nicht in das Netz eingespeiste Leistung aber anderweitig außerhalb des Netzes einsetzt, beispielsweise für einen Dumpload (Widerstand) oder die Einspeisung der nicht in das Netz abgegebenen Leistung in Kondensatoren oder andere Zwischenspeicher erfolgt.

2. Verfahren nach Anspruch 1,
**dadurch gekennzeichnet, dass** die von dem Generator (12) an den Verbraucher abgegebene Leistung in Abhängigkeit von dem Betrag des an den Verbraucher abgegebenen Stroms geregelt wird.

3. Verfahren nach Anspruch 1 oder 2.
**dadurch gekennzeichnet, dass** der Strom em Wechselstrom mit vorgebbarer Frequenz ist und dass die vorgebbare Frequenz bevorzugt im Wesentlichen der Netzfrequenz entspricht.

4. Verfahren nach einem der vorstehenden Ansprüche, **dadurch gekennzeichnet, dass** der abgegehene Strom einen vorgebbaren Betrag nicht überschreitet, eine vorgebbare Phasenlage aufweist und/oder einen vorgebbaren Blindstrom-Anteil entheil.

5. Verfahren nach Anspruch 4.
**dadurch gekennzeichnet, dass** bei mehrphasigen Systemen Betrag, Phasenlage und/öder Blindstrom-Anteil für jede Phase den vorgebbaren Wert nicht überschreiten.

6. Verfahren nach Anspruch 4 oder 5,
**dadurch gekennzeichnet, dass** für jede Phase ein von den übrigen Phasen unabhängiger Wert vorgebbar ist.

7. Verfahren nach einem der vorstehenden Ansprüche, **dadurch gekennzeichnet, dass** der Strom für jede von einem Kurzschluss betroffene Phase auf dem Momentanwert im Moment des Kurzschlusses begrenzt wird.

8. Windenergieanlage, (2) mit einem Rotor (4) und einem mit dem Rotor gekoppelten elektrischen Generator zum Abgeben elektrischer Leistungen an ein elektrisches Netz, (6) einer Regelungseinrichtung mit einem Stromaufnehmer zum Aufnehmen des an ein Netz (6) abgegebenen elektrischen Stromes, so dass die von dem Generator an das Netz (6) abgegebene Leistung in Abhängigkeit von dem durch den Stromaufnehmer aufgenommenen Strom regelbar ist. **dadurch gekennzeichnet, dass** die Regelungseinrichtung einen Mikroprocessor aufweist, der ein Verfahren gemäß einem der Ansprüchs 1-7 durchführt.

9. indenergieanlage nach Anspruch 8.
**dadurch gekennzeichnet, dass** die Regelungseinrichtung einen externen Steuerungseingang (22) zur Übergabe von Daten an die Regelungseinrichtung.

10. Windenergieanlage nach einem der Ansprüche 8-9, **gekennzeichnet durch** eine Vorrichtung zur Erfassung eines Kurzschusses im Netz.

11. Windenergieanlage nach Anspruch 10,
**gekennzeichnet durch** eine Spannungserfassungseinrichtung zum Erlassen der Spannung wenigstens einer Phase im Netz.

12. Windenergieanlage nach Anspruch 10 oder 11, **gekennzelchnet durch** emen Phasenwachter zum Erfassen der Phasenlage der Ströme und/oder Spannungen wenigstens einer Phase im Netz.

13. Windenergieanlage, nach einem der vorstehenden Ansprüche 8 bis 12, mit einem Generator zum Abgeben elektrischer Leistung an ein elektrisches Netz, **dadurch gekennzeichnet, dass** die Windenergieanlage am Netz bleibt, wenn sich im Netz ein Kurzschluss oder eine vergleichbare Betriebsstörung einstellt, beispielsweise die Spannung einen Wert annimmt, der mehr als 20% und bevorzugt mehr als 40% vom Sollwert abweicht.

14. Windenergieanlage, nach einem der vorhergehenden Ansprüche 8 bis 13, mit einem Generator zum Abgeben elektrischer Leistung an ein elektrisches Netz und einem externen Steuereingang mit Übergabe von Daten an eine Regelungseinrichtung der Windenergieanlage, wobei über den externen Steuereingang Schaltbefehle vom Netzbetreiber oder Energieversorger, der das Netz betreibt, empfangen werden und in Abhängigkeit dieser Steuersignale vom Netzbetreiber die Windenergieanlage nach Bedarf des Netzbetreibers gesteuert wird und somit elektrische Leistung, beispielsweise die Wirkleistung, Windleistung, Stromlage, Spannungslage oder Phasenlage in einer Form in das Netz eingespeist wird, wie dies vom Netzbetreiber erfordert wird.

## Claims

1. Method for operation of a wind energy installation having an electrical generator, which can be driven by a rotor (4), for emission of electrical power to an electrical load, specifically an electrical grid, even in the event of a short circuit in the grid, wherein the power which is emitted from the generator (12) to the load (6) is regulated as a function of a current which is emitted to the load, **characterized in that**, when the current emitted from the generator to the load exceeds a predeterminable maximum value (I(max)), a control device of the wind energy installation is used to adjust the power that is produced by the overall wind energy installation and/or its generator such that the current which is fed in does not exceed the predetermined maximum value (I(max)), wherein, in the event of a short circuit in the grid, this is effected by the wind energy installation feeding considerably less power into the grid than before, but using the power which is thus not fed into the grid in some other way outside the grid, for example for a dump load (resistance) or for feeding the power that is not emitted into the grid to capacitors or other buffer stores.

2. Method according to Claim 1,
**characterized**
**in that** the power which is emitted from the generator (12) to the load is regulated as a function of the magnitude of the current which is emitted to the load.

3. Method according to Claim 1 or 2,
**characterized**
**in that** the current is an alternating current at predeterminable frequency and in that the predeterminable frequency preferably corresponds essentially to the grid frequency.

4. Method according to one of the preceding claims,
**characterized**
**in that** the emitted current does not exceed a predeterminable magnitude, has a predeterminable phase angle and/or comprises a predeterminable reaction current component.

5. Method according to Claim 4,
**characterized**
**in that**, in the case of polyphase systems, the magnitude, phase angle and/or reaction current component do not exceed the predeterminable value for each phase.

6. Method according to Claim 4 or 5,
**characterized**
**in that** a value which is independent of the other phases can be predetermined for each phase.

7. Method according to one of the preceding claims,
**characterized**
**in that** the current for each phase which is affected by a short circuit is limited to the instantaneous value at the moment of the short circuit.

8. Wind energy installation (2), having a rotor (4) and having an electrical generator which is coupled to the rotor for emission of electrical powers to an electrical grid (6), having a control device with a current sensor for sensing the electric current which is emitted to a grid (6), so that the power which is emitted from the generator to the grid (6) can be regulated as a function of the current which is sensed by the current sensor,
**characterized**
**in that** the control device has a microprocessor which carries out a method according to one of Claims 1 to 7.

9. Wind energy installation according to Claim 8,
**characterized**
**in that** the control device has an external control input (22) for transferring data to the control device.

10. Wind energy installation according to one of Claims 8 - 9,
**characterized**
**by** an apparatus for detection of a short circuit in the grid.

11. Wind energy installation according to Claim 10,
**characterized**
**by** a voltage detection device for detection of the voltage in at least one phase in the grid.

12. Wind energy installation according to Claim 10 or 11,
**characterized**
**by** a phase monitor for detection of the phase angle of the currents and/or voltages in at least one phase in the grid.

13. Wind energy installation, according to one of the preceding claims 8 to 12, having a generator for emission of electrical power to an electrical grid, **characterized**
**in that** the wind energy installation remains connected to the grid when a short circuit or a comparable operating disturbance occurs in the grid, for example with the voltage assuming a value which differs by more than 20% and preferably by more than 40% from the nominal value.

14. Wind energy installation, according to one of the preceding claims 8 to 13, having a generator for emission of electrical power to an electrical grid and having an external control input with transfer of data to a control device for the wind energy installation, wherein switching commands from the grid operator or power supply authority who is operating the grid are received via the external control input and the wind energy installation is controlled in accordance with the grid operator's requirement as a function of these control signals from the grid operator, so that electrical power, for example the real power, wind power, current level, voltage level or phase angle, are fed into the grid in a form as required by the grid operator.

## Revendications

1. Procédé pour faire fonctionner une éolienne avec un générateur électrique entraînable par un rotor (4) pour fournir de l'énergie électrique à un consommateur électrique, à savoir un réseau électrique aussi dans le cas d'un court-circuit dans le réseau, l'énergie fournie par le générateur (12) au consommateur (6) étant régulée en fonction d'un courant fourni au consommateur, **caractérisé en ce que** lorsque le courant fourni par le générateur au consommateur dépasse une valeur maximale prédéfinissable (I(max)), l'énergie générée par l'éolienne entière et/ou son générateur est réglée à l'aide d'un dispositif de régulation de l'éolienne de sorte que le courant injecté ne dépasse pas la valeur maximale prédéfinie (I(max)), cela se produisant de en cas de court-circuit dans le réseau du fait que l'éolienne injecte une énergie nettement plus faible que précédemment dans le réseau, mais utilise l'énergie qui n'est ainsi pas injectée dans le réseau autrement en dehors du réseau, par exemple pour un banc de dissipation (résistance) ou l'injection de l'énergie non fournie dans le réseau est effectuée dans des condensateurs ou autre réservoir intermédiaire.

2. Procédé selon la revendication 1,
**caractérisé en ce que** la puissance fournie au consommateur par le générateur (12) est régulée en fonction de la quantité de courant fournie au consommateur.

3. Procédé selon la revendication 1 ou 2,
**caractérisé en ce que** le courant est un courant alternatif ayant une fréquence prédéfinissable et **en ce que** la fréquence prédéfinissable correspond de préférence essentiellement à la fréquence de réseau.

4. Procédé selon l'une quelconque des revendications précédentes,
**caractérisé en ce que** le courant fourni ne dépasse pas une quantité prédéfinissable, présente une position de phase prédéfinissable et/ou contient une fraction de courant déwatté prédéfinissable.

5. Procédé selon la revendication 4,
**caractérisé en ce que** dans le cas de systèmes multiphases, la quantité, la position de phase et/ou la fraction de courant déwatté pour chaque phase ne dépassent pas la valeur prédéfinissable.

6. Procédé selon la revendication 4 ou 5,
**caractérisé en ce qu'**une valeur indépendante des autres phases peut être prédéfinie pour chaque phase.

7. Procédé selon l'une quelconque des revendications précédentes,
**caractérisé en ce que** le courant pour chaque phase concernée par un court-circuit est limité à la valeur momentanée au moment du court-circuit.

8. Éolienne (2) comprenant un rotor (4) et un générateur électrique couplé au rotor pour fournir de l'énergie électrique à un réseau électrique (6), un dispositif de régulation avec un capteur de courant pour détecter le courant électrique fourni à un réseau (6) afin que la puissance fournie par le générateur au réseau (6) puisse être régulée en fonction du courant détecté par le capteur de courant, **caractérisée en ce que** le dispositif de régulation présente un microprocesseur qui réalise un procédé selon l'une quelconque des revendications 1 à 7.

9. Éolienne selon la revendication 8,
**caractérisée en ce que** le dispositif de régulation présente une entrée de commande externe (22) pour transmettre des données au dispositif de régulation.

10. Éolienne selon l'une quelconque des revendications 8 à 9,
**caractérisée par** un dispositif pour détecter un court-circuit dans le réseau.

11. Éolienne selon la revendication 10,
**caractérisée par** un dispositif de détection de tension pour détecter la tension d'au moins une phase dans le réseau.

12. Éolienne selon la revendication 10 ou 11,
**caractérisée par** un contrôleur de phase pour détecter la position de phase des courants et/ou des tensions d'au moins une phase dans le réseau.

13. Éolienne selon l'une quelconque des revendications précédentes 8-12, comprenant un générateur pour fournir de l'énergie électrique à un réseau électrique, **caractérisée en ce que** l'éolienne reste sur le réseau quand un court-circuit ou un dysfonctionnement comparable se produit sur le réseau, par exemple quand la tension adopte une valeur qui s'écarte de plus de 20% et de préférence de plus de 40% de la valeur de consigne.

14. Éolienne selon l'une quelconque des revendications précédentes 8-13, comprenant un générateur pour fournir de l'énergie électrique à un réseau électrique et une entrée de commande externe avec la transmission de données à un dispositif de régulation de l'éolienne, des ordres de commutation étant reçus par l'intermédiaire de l'entrée de commande externe par l'opérateur de réseau ou le distributeur d'énergie qui exploite le réseau, et l'éolienne étant commandée par l'opérateur de réseau selon le besoin de l'opérateur de réseau en fonction de ces signaux de commande, et par conséquent la puissance électrique, à savoir la puissance active, la puissance éolienne, la position du courant, la position de tension ou la position de phase étant injectée dans le réseau dans une forme telle qu'elle est requise par l'opérateur de réseau.
